# FASCICULE DE BREVET EUROPEEN

(11) **EP 0 680 231 B1**
(45) Date de publication et mention de la délivrance du brevet: **28.05.2003**
(21) Numéro de dépôt: 95400942.9
(22) Date de dépôt: 26.04.1995
(51) Int. Cl.: H04Q 7/32

(54) **Procédure de remplacement automatique d'un module d'identification à l'utilisateur d'un terminal mobile dans un réseau de radiocommunication**
Automatisches Identifikationsmodulaustauschverfahren für den Benutzer eines mobilen Endgeräts in einem Funkübertragungsnetwerk
Automatic identification module replacement procedure for the user of a mobile terminal in a radio communication network

(30) Priorité: 29.04.1994 FR 9405256
(43) Date de publication de la demande: 02.11.1995
(73) Titulaire: ALCATEL, 75008 Paris (FR)
(72) Inventeur: Jouin, Christophe, F-75015 Paris (FR); Desblancs, Eric, F-75018 Paris (FR)
(74) Mandataire: El Manouni, Josiane

(56) Documents cités:
- EP-A- 0 481 714
- ECHO DES RECHERCHES, no. 139, 31 Mars 1990 ISSY/MOULINEAUX, FR, pages 13-20, JOLIE ET AL. 'Une application de la carte à microprocesseur: le module d'identité d'abonné du radiotéléphone numérique européen'

## Description

La présente invention concerne les systèmes de radiocommunication en général, et concerne en particulier une procédure de remplacement automatique du module d'identification d'un utilisateur de terminal mobile d'un réseau de communication tel qu'un réseau GSM lorsque son module d'identification présente un problème.

Dans un réseau de radiocommunication de type GSM ou DCS, chaque utilisateur possède une carte d'identification (SIM) qui, outre l'identification de l'utilisateur, contient d'autres informations telles que le répertoire de l'utilisateur, des codes de chiffrement des messages... Cette carte d'identification est généralement une carte à puce connue sous le nom de carte SIM.

Malheureusement, les cartes d'identification à puce ont une durée de vie limitée et au bout d'un certain temps, peut survenir un problème de lecture ou d'écriture de la carte. Dans un réseau du type GSM ou DCS, il existe une procédure (recommandation GSM 11.11) qui permet d'avertir le terminal qu'un problème a été détecté. Aussi, le message d'avertissement peut être :
- lecture ou écriture effectuée après X essais. Ce message signale une usure de la carte SIM qui aura besoin d'être bientôt remplacée,
- lecture ou écriture impossible. Ce message signifie que la carte SIM doit être remplacée. il faut noter que, dans ce cas, le terminal peut utiliser une valeur par défaut de l'information inaccessible.

Actuellement, lorsque cela est possible, le terminal, après réception du message l'avertissant de la défectuosité de la carte SIM, se positionne en mode dégradé et fonctionne avec des valeurs par défaut. Ce fonctionnement entraîne des inconvénients tant pour l'opérateur qui gère le réseau (utilisation inutile de ressources dédiées) que pour l'utilisateur (perte d'informations telles que les répertoires de numéros ou accès impossible à certaines fonctions.

Par exemple, l'information de localisation du terminal est sauvegardée dans la carte SIM au moyen d'un identificateur de zone permettant de ne pas refaire de localisation lorsque le terminal est dans cette zone. En outre, le terminal doit se localiser de façon périodique vis à vis du réseau suivant une temporisation emmagasinée dans la carte SIM. Par conséquent, la défectuosité empêchant l'accès à ces informations empêche la gestion périodique de la localisation du terminal.

Les problèmes ci-dessus résultant de la défectuosité des cartes SIM sont difficiles à gérer dans la mesure où il n'existe pas de procédure installée en dehors des retours de cartes SIM par les clients.

Le document EP-A-0481714 donne une indication menant à un remplacement automatique de la carte, par exemple tous les deux ans, ou à un remplacement de la carte dans le cas de perte ou de dommage sur cette carte ou pour d'autres raisons.

C'est pourquoi le but de l'invention est de fournir une procédure permettant au réseau de prendre en charge le remplacement d'une carte d'identification d'utilisateur défectueuse sans que ce soit l'utilisateur qui décide de la remplacer.

L'objet de l'invention est donc une procédure de remplacement automatique du module d'identification amovible d'un utilisateur de terminal dans un réseau de communication tel qu'un réseau de radiocommunication GSM ou DCS. Cette procédure comporte les étapes d'emmagasinage dans la mémoire du terminal d'un message indiquant qu'un problème d'écriture et/ou lecture a été détecté sur le module d'identification, transmission d'un message d'avertissement du terminal à la station de contrôle du terminal lors du premier échange d'informations qui suit la détection du problème, mise à jour d'une base de données répertoriant les modules d'identification défectueux à la station de contrôle et initialisation d'une procédure d'envoi d'un nouveau module d'identification à l'utilisateur du terminal.

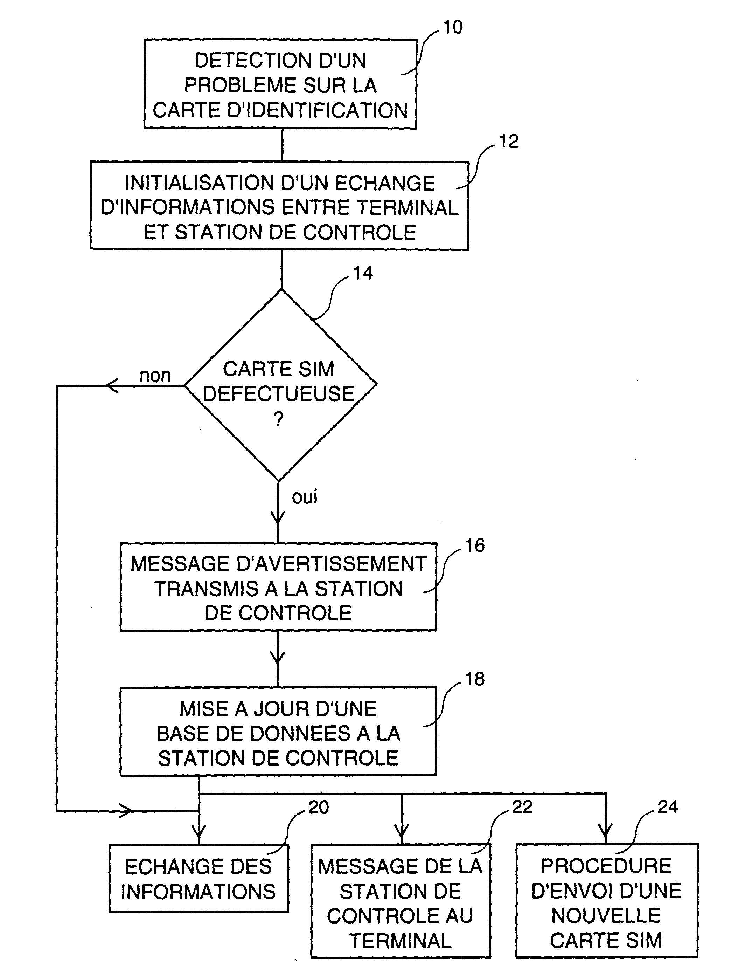

Les buts, objets et caractéristiques de la présente invention seront mieux compris à la lecture de la description qui suit faite en référence à la figure unique qui représente un organigramme de la procédure selon l'invention.

On suppose que le terminal mobile fait partie d'un réseau de radiocommunication du type GSM ou DCS et que chaque utilisateur dispose d'une carte d'identification (SIM) qu'il doit insérer dans son terminal chaque fois qu'il veut procéder à un appel téléphonique. Cependant, il est évident qu'une telle carte pourrait être remplacée par tout type de module d'identification amovible sans sortir du cadre de l'invention.

Les cartes SIM sont des cartes à puce qui peuvent présenter des problèmes d'écriture et/ou de lecture au bout d'un certain temps d'utilisation. Dès la détection (10) d'un problème par le terminal, l'indication du problème est emmagasinée dans la mémoire du terminal en attendant un échange d'informations entre le terminal et le réseau.

A la prochaine mise en marche du terminal mobile, ou lors d'un appel téléphonique, ou de façon périodique lorsque le terminal procède à sa localisation vis à vis du réseau, un échange d'informations (12) est initialisé entre le terminal et le réseau par l'intermédiaire de la station de base du terminal (BTS). A ce moment là, le terminal vérifie dans sa mémoire que la carte SIM est défectueuse (14). Si c'est le cas, un message d'avertissement est transmis au réseau par l'intermédiaire de la station de base (16). Dans le réseau GSM ou DCS, la station de base transfère le message au centre de commutation (MSC) pour la mise à jour d'une base de données répertoriant les cartes SIM défectueuses (18).

Ces opérations étant effectuées, l'échange d'informations proprement dit peut alors avoir lieu (20). On doit noter que si la carte SIM n'est pas défectueuse, on passe directement à l'échange d'informations.

cependant, le réseau procède à deux opérations essentielles pour la procédure selon l'invention, ceci à la suite de la mise à jour de la base de données des cartes d'identification défectueuses. En effet, un message court (SMS) est transmis par la station de base au terminal (22) pour avertir ce dernier qu'une nouvelle carte SIM va lui être envoyée en même temps que le centre de commutation après analyse de sa base de données initialise la procédure d'envoi d'une nouvelle carte à l'utilisateur (24).

Des variantes ou perfectionnements peuvent être apportés à la procédure ci-dessus, sans sortir du cadre de l'invention. Ainsi, la transmission du message d'avertissement du terminal à la station de base pourrait se faire immédiatement après la détection du problème. Mais, ceci entraînerait la mise en oeuvre de ressources importantes qui ne se justifient pas dans la mesure où le prochain échange au cours duquel le message pourra être transmis, suit de près la détection du problème en termes de temps de fonctionnement.

De même, on peut prévoir qu'un message est affiché sur l'écran du terminal dès qu'un problème est détecté de façon à avertir l'utilisateur que le terminal va fonctionner en mode dégradé et que toutes les fonctions ne seront désormais plus possibles.

En conclusion, la procédure qui vient d'être décrite apporte un certain nombre d'avantages au fonctionnement du réseau tels qu'un meilleur service fourni à l'utilisateur, une gestion contrôlée du parc des cartes SIM, une anticipation de problèmes de la carte SIM plus graves qui pourraient amener une inutilisation du terminal et donc une insatisfaction du client et enfin une diminution du temps de fonctionnement du terminal en mode dégradé.

Bien que l'invention a été décrite en liaison avec un réseau de radiocommunication de type GSM ou DCS, il est évident pour l'homme du métier que l'invention peut s'appliquer à tout type de réseau de communication et son module d'identification d'abonné associé.

## Revendications

1. Procédure de remplacement automatique du module d'identification d'un utilisateur de terminal dans un réseau de communication comprenant les étapes suivantes :
emmagasinage dans la mémoire du terminal d'un message indiquant la détection d'un problème d'écriture et/ou lecture dans le module d'identification de l'utilisateur,
transmission d'un message d'avertissement du terminal à la station de contrôle du terminal lors du premier échange d'informations qui suit la détection du problème,
mise à jour d'une base de données répertoriant les modules d'identification défectueux à la station de contrôle, et initialisation d'une procédure d'envoi d'un nouveau module d'identification à l'utilisateur du terminal.

2. procédure selon la revendication 1, dans laquelle un message d'avertissement est affiché sur l'écran du terminal dès la détection du problème d'écriture et/ou lecture du module d'identification.

3. procédure selon la revendication 1 ou 2, dans laquelle la station de contrôle avertie du problème transmet en retour un message pour affichage sur l'écran du terminal avertissant l'utilisateur qu'une procédure de remplacement de son module d'identification est initialisée.

4. procédure selon l'une des revendications 1 à 3, dans laquelle ledit réseau de communication est un réseau GSM ou DCS, ledit terminal est un terminal mobile et ledit module d'identification d'utilisateur est une carte SIM.

## Patentansprüche

1. Verfahren zum automatischen Ersetzen des Identifikationsmoduls eines Benutzers eines Endgeräts in einem Fernmeldenetz, mit den folgenden Schritten:
- Speichern einer Nachricht, die die Erfassung eines Schreib- und/oder Leseproblems in dem Identifikationsmodul des Benutzers anzeigt, in dem Speicher des Endgeräts,
- Übertragen einer Warnnachricht vom Endgerät an die Steuerstation des Endgerätes beim ersten Informationsaustausch, der auf die Erfassung des Problems folgt,
- Aktualisierung einer Datenbank, in der die defekten Identifikationsmodule verzeichnet sind, an der Steuerstation, und
- Initialisieren einer Prozedur zum Senden eines neuen Identifikationsmoduls an den Benutzer des Endgeräts.

2. Verfahren nach Anspruch 1, bei dem eine Warnnachricht auf dem Bildschirm des Endgeräts anzeigt wird, sobald das Schreib- und/oder Leseproblem des Identifikationsmoduls erfasst worden ist.

3. Verfahren nach Anspruch 1 oder 2, bei dem die von dem Problem in Kenntnis gesetzte Steuerstation eine Nachricht zum Anzeigen auf dem Bildschirm des Endgeräts rückübermittelt, die den Benutzer benachrichtigt, dass eine Prozedur zum Ersetzen seines Identifikationsmoduls initialisiert ist.

4. Verfahren nach Anspruch 1 bis 3, bei dem das Kommunikationsnetz ein GSM- oder DCS-Netz ist, das Endgerät ein mobiles Endgerät ist und das Identifikationsmodul des Benutzers eine SIM-Karte ist.

## Claims

1. A procedure for automatically replacing the module for identifying a user of a terminal in a communication network, said procedure including the following steps:
storing in the memory of the terminal a message indicating the detection of a problem writing and/or reading the user identification module,
transmitting a warning message from the terminal to the control station of the terminal during the first exchange of information following detection of the problem,
updating a database listing defective identification modules at the control station, and
initializing a procedure for sending a new identification module to the user of the terminal.

2. A procedure according to claim 1 wherein a warning message is displayed on the screen of the terminal immediately the problem writing and/or reading the identification module is detected.

3. A procedure according to claim 1 or 2 wherein the control station when advised of the problem transmits in return a message for display on the screen of the terminal advising the user that a procedure for replacing its identification module has been started.

4. A procedure according to any of claims 1 to 3 wherein said communication network is a GSM or DCS network, said terminal is a mobile terminal and said user identification module is an SIM card.
